# EUROPEAN PATENT APPLICATION

(11) **EP 1 562 373 A2**
(43) Date of publication of application: **10.08.2005**
(21) Application number: 05250637.5
(22) Date of filing: 04.02.2005
(51) Int. Cl.: H04N 5/44

(54) **Display device capable of selecting a displayed object by using a remote controller and method thereof**

(30) Priority: 06.02.2004 KR 2004008075
(71) Applicant: Samsung Electronics Co., Ltd., Suwon-si, Gyeonggi-do 442-742 (KR)
(72) Inventor: Lee, Hwa-kyung, Gangnam-gu, Seoul (KR)
(74) Representative: Brandon, Paul Laurence

(57) **Abstract**

A display device capable of easily selecting or controlling an object of a web page displayed on a TV screen by using a remote controller while automatically converting a remote controller mode according to the sort or type of object, and a method thereof. The display device includes an input unit (100) for receiving a remote control signal generated when a user uses the remote controller, a remote controller mode management unit (200) receiving the remote control signal from the input unit (100) in order to check a key code value of the remote control signal, and in order to judge and convert a present remote controller mode, and a control unit (300) for controlling an operation of the remote controller based on the remote control signal inputted from the user and controlling a remote controller mode according to a sort or type of object selected by the user.

## Description

The present invention relates generally to display devices capable of selecting an object by using a remote controller and methods thereof.

Recently, a TV has come equipped with a variety of functions and users can easily access the Internet at home, so many users want to access the Internet via the TV.

That is, there is an increase of consumers who wish to access portal sites providing local information as well as general web sites at home in order to receive information by using a large-screen TV.

Generally, users can select channels by a remote controller. However, it is difficult to select or manage hypertexts or contents of a web page by using the remote controller.

Besides hypertexts and images, web pages include contents provided through plug-in applications. The contents are represented with an <OBJECT> tag and are provided through a separate application instead of a separate browser.

One such plug-in application is a Flash Player. A Flash Player is used for providing animation and is utilized as a user interface. In addition, a Flash Player has a function of processing inputs of keys or a mouse so that a Flash Player can be used for game utilities.

Hereinafter, a general method for operating an Internet browser installed in a TV or a set-top box will be described.

First, in a case of a remote controller, which does not provide a 2D positioning function available in a mouse, a focus must be moved into a hypertext or an image having an anchor from among HTML contents by using a direction key or a special key of the remote controller. A user can access a web site by operating a selection button if the user wants to access the web site.

If the user uses the Internet browser with the direction key or the special key of the remote controller, the user can easily have control of the hypertext anchor or the image. However, it is impossible to provide a plug-in object function which would require an input from a mouse.

In addition, in a case of a remote controller capable of providing 2D positioning function, a track ball is installed in the remote controller. That is, a user may move a position of a cursor into a hypertext or an image by using the track ball. In this state, if the user operates a selection button corresponding to a left button of a mouse, the user can access a selected web site,

The remote controller having the track ball may operate identical to a mouse so that the user can access the web page without restriction by using the remote controller. However, it is very cumbersome to use a mouse with a TV interface.

Korean Utility Model Registration No. 20-0311043 discloses a remote control pointing device of a digital set-top box. The remote control pointing device includes a remote/pointing mode convert key. In a pointing mode, a user moves a pointer by using a direction key and selects a predetermined key as a click key. However, according to the above remote control pointing device, the user must switch a mode of a remote controller from the pointing mode to the remote mode or vice versa according to the purpose of use of the TV.

Accordingly, an aim of preferred embodiments of the present invention is to provide an apparatus and a method allowing a user to conveniently select and control an object of a web page displayed on a TV screen by using a remote controller.

Another aim of preferred embodiments of the present invention is to provide an apparatus and a method for automatically varying an input mode of a remote controller according to the sort of objects of a web site.

Accordingly, in a first aspect of the present invention there is provided an exemplary display device capable of selecting an object by using a remote controller, the display device comprising: an input unit for receiving a remote control signal generated when a user uses the remote controller; a remote controller mode management unit receiving the remote control signal from the input unit in order to check a key code value of the remote control signal, and in order to judge and convert a present remote controller mode; and a control unit for controlling an operation of the remote controller based on the remote control signal inputted from the user and controlling a remote controller mode according to a sort or type of objects selected by the user.

Suitably, the key code value of the remote control signal includes key code values of a first key group performing a predetermined function by taking the remote controller mode into consideration or key code values of a second key group performing predetermined functions assigned to predetermined keys.

Suitably, the first key group is operated with a keyboard mode for controlling the object through a key event or is operated with a mouse mode for controlling the object through a mouse event using a mouse cursor.

Suitably, the remote controller mode management unit includes a remote controller mode check module, which receives the remote control signal from the input unit in order to check the key code value of the remote control signal and the remote controller mode preset in the remote controller and to set the remote controller mode as a keyboard mode when loading a web page, and a remote controller mode convert module, which stores the remote controller mode transmitted thereto from the remote controller mode check module, converts the remote controller mode according to a request of the control unit, and stores the converted remote controller mode therein.

Suitably, the control unit includes an event processing module for controlling an operation of the remote controller according to the remote control signal and an object judgment module for judging a sort of the object selected by the user and converting the remote controller mode based on a result of the judgment.

Suitably, if the object selected by the user requires plug-in applications, then the remote controller mode is set as a mouse mode.

Suitably, the display device further comprises a display unit for displaying a web page and the object selected by the user according to a request of the user.

According to another aspect of the present invention, there is provided a displaying method capable of selecting an object by using a remote controller, the displaying method comprising the steps of: i) displaying a web page requested by a user and determining a key code value of a control signal selected by the user; ii) judging a remote controller mode preset in the remote controller and controlling the object according to the remote controller mode if the key code value of the remote control signal belongs to a first group; and iii) performing functions assigned to predetermined keys selected by the user if the key code value of the remote control signal belongs to a second group.

Suitably, the remote controller mode includes a keyboard mode for controlling the object through a key event or a mouse mode for controlling the object through a mouse event using a mouse cursor.

Suitably, step ii) includes the substeps of: a) moving a selection focus to a second object aligned next to a first object in which the selection focus is located when the remote controller mode preset in the remote controller is a keyboard mode and the key code value of the remote control signal matches with a direction key; and b) judging a sort of the object selected by the user when the remote controller mode preset in the remote controller is the keyboard mode and the key code value of the remote control signal matches with a selection key.

Suitably, substep b) includes the steps of: A) converting the remote controller mode into a mouse mode if the sort of the object selected by the user requires plug-in applications; and B) moving the selection focus to a ULR connected to the object if the sort of the object selected by the user does not require plug-in applications.

Suitably, step ii) includes the substeps of: a) operating the remote controller with a mouse event and determining a button value inputted by the user if the remote controller mode is a mouse mode; b) operating the remote controller with a mouse movement event and moving a mouse cursor in a predetermined direction if the user selects a direction button; and c) operating the remote controller with a mouse click event and selecting a predetermined object if the user selects a selection button.

Suitably, step iii) includes the substeps of: a) closing a web page requested by the user if the user selects an end key; and b) converting the remote controller mode into a keyboard mode if the user selects a cancellation key.

The present invention will be more apparent from the following detailed description, by way of example only, taken in conjunction with the accompanying drawings, in which:

FIG. 1 is a block diagram schematically showing a display device capable of selecting an object by using a remote controller according to one embodiment of the present invention;

FIG. 2 is a flowchart schematically showing a display method capable of selecting an object by using a remote controller according to one embodiment of the present invention;

FIG. 3 is a flowchart schematically showing a display method capable of selecting an object by using a remote controller when an input mode of a remote controller is a mouse event according to one embodiment of the present invention; and

FIG. 4 is a flowchart schematically showing a display method capable of selecting an object by using a remote controller when a second key group is selected according to one embodiment of the present invention.

Hereinafter, a preferred embodiment of the present invention will be described with reference to the accompanying drawings. The matters defined in the description such as a detailed construction and elements are nothing but the ones provided to assist in a comprehensive understanding of the invention. Thus, it is apparent that the present invention can be carried out without the particular embodiment described herein. In the following description of an embodiment of the present invention, the same drawing reference numerals are used for the same elements even in different drawings. Also, a detailed description of known functions and configurations will be omitted when such a description is unnecessary to explain the preferred embodiment.

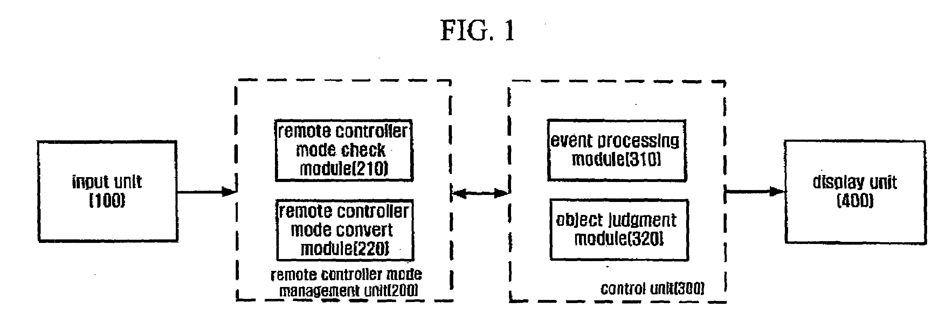

FIG. 1 is a block diagram schematically showing a display device capable of selecting an object by using a remote controller according to one embodiment of the present invention. As shown in FIG 1, the display device includes an input unit 100, a remote controller mode management unit 200, a control unit 300 and a display unit 400.

A remote control signal generated when a user selects a remote controller is inputted into the input unit 100.

The remote controller mode management unit 200 receives the remote control signal from the input unit 100. Upon receiving the remote control signal from the input unit 100, the remote controller mode management unit 200 checks a key code value of the remote control signal, and detects and changes a present mode of the remote controller. That is, the remote controller mode management unit 200 checks both the key code value of the received remote control signal and a mode of the remote controller present in the remote controller. In addition, the remote controller mode management unit 200 includes a remote controller mode check module 210 for setting a mode of the remote controller as a keyboard mode when loading a web page and a remote controller mode convert module 220 which stores the remote controller mode transmitted thereto from the remote controller mode check module 210, converts the remote controller mode according to a request of the control unit 300, and stores the converted remote controller mode therein.

Herein, the key code value of the remote control signal includes a first key group (for example, a direction key, a selection key and the like) performing predetermined functions by taking the remote controller mode into consideration and a second key group (for example, an end key, a cancellation key and the like) performing predetermined functions assigned to keys. In addition, the first key group can be operated with a keyboard mode for controlling an object through a key event and a mouse mode for controlling the object through a mouse event using a mouse cursor.

The control unit 300 controls an operation of a remote controller based on the remote control signal generated when the user uses the remote controller and controls the remote controller mode according to the sort or type of object(s) selected by the user. The control unit 300 includes an event processing module 310 for controlling the operation of the remote controller according to the remote control signal, and an object judgment module 320 for judging the sort or type of the object selected by the user and converting the mode of the remote controller based on the above judgment.

That is, after the remote controller mode check module 210 has determined that the key code value inputted by the user belongs to one of the first key group and the second key group by checking the key code value of the remote control signal received in the remote controller mode check module 21.0, the event processing module 310 controls the operation of the remote controller according to the remote controller mode of the corresponding key group and a specific key value. Herein, the remote controller mode includes, for example, a keyboard mode and a mouse mode. In addition, the special key value includes signal values transmitted from an end key requesting a close of the web page, a cancellation key requesting a close of the mouse mode, and keys having predetermined functions.

In addition, the object judgment module 320 judges the sort of object selected by the user and sets the remote controller mode as a mouse mode if the object judgment module 320 judges that the object requires a plug-in application, such as moving pictures and games used in a Flash Player. In addition, the object judgment module 320 sets the remote controller mode as a keyboard mode if the object judgment module 320 judges that the object does not require the plug-in application, such as a web page consisting of hypertexts (hypertext anchor). For example, the module 320 examines an object tag to determine whether a plug-in application is necessary.

The display unit 400 displays the web page and a page connected to an object selected by the user according to a request of the user.

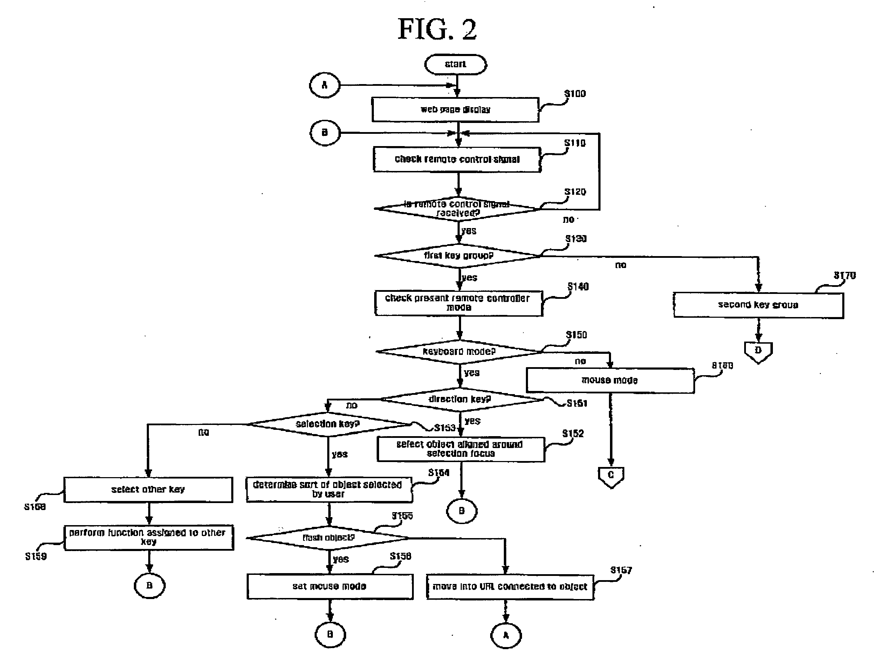

FIG. 2 is a flowchart schematically showing a display method capable of selecting an object by using a remote controller according to one embodiment of the present invention. If a user requests a predetermined web page, the predetermined web page is displayed on a TV screen (S100). At this time, the remote controller mode check module 210 sets the remote controller mode as a keyboard mode.

Then, the input unit 100 checks the remote controller signal (S110) and determines whether or not the user inputted the remote controller signal (S120). If it is determined that the user did not input the remote controller signal in step 120, then a waiting step is carried out for a predetermined time while waiting for the remote control signal input of the user. However, if it is determined that the user has inputted the signal into the remote controller in step 120, a key code value of the remote control signal inputted by the user is checked.

After that, it is determined whether the key code value belongs to the first key group (S130) or the second key group (S170).

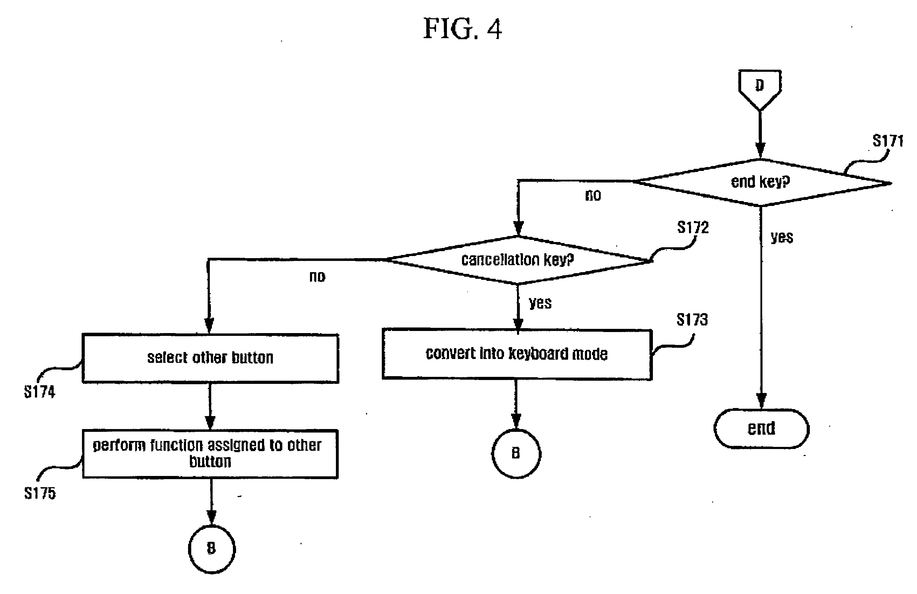

If it is determined that the key code value belongs to the first key group in step 130, the remote controller mode check module 210 checks a present remote controller mode (S140). In addition, if it is determined that the key code value belongs to the second key group in step 130, functions assigned to selected keys are checked regardless of the remote controller mode in such a manner that functions assigned to the selected keys can be performed (S170). Step 170 will be described later in detail with reference to FIG. 4.

If the present remote controller mode is a keyboard mode, the remote controller is operated with keys (key event). In addition, if the present remote controller mode is a mouse mode, the remote controller is operated with the mouse (mouse event).

That is, if the key code value of the remote control signal inputted by the user belongs to the first key group, the present remote controller mode is checked. At this time, if the present remote controller mode is the keyboard mode, the remote controller is operated with the key event. Herein, the key event may be performed using a direction key, a selection key and the like.

If the key code value inputted from the user corresponds to a key code value of the direction key (S151), the event processing module 310 moves a selection focus into an object aligned around an object in which the selection focus is presently located (S152).

For instance, if the user selects a left direction key, the selection focus moves into an object positioned at a left side of an object in which the selection focus is presently located.

If the key code value inputted from the user corresponds to a key code value of the selection key (S153), the object judgment module 320 judges the sort or type of object selected by the user (S154).

If the object selected by the user requires plug-in applications (S155), for example, an object used in the Flash Player, the object judgment module 320 sends a signal to the remote controller mode convert module 220 in order to convert the remote controller mode into the mouse mode.

Thus, the remote controller mode convert module 220 converts the remote controller mode into the mouse mode (S156) and the remote controller is operated with the mouse event.

If the object selected by the user does not require plug-in applications (S155), for example, a web page consisting of hypertexts, the remote controller is operated with the keyboard mode so that the focus is moved into a URL connected to a hypertext selected by the user (S157).

In the meantime, if the key code value inputted from the user corresponds to a key code value of a predetermined key having a predetermined function, the predetermined function assigned to the predetermined key is carried out (S158 and S159).

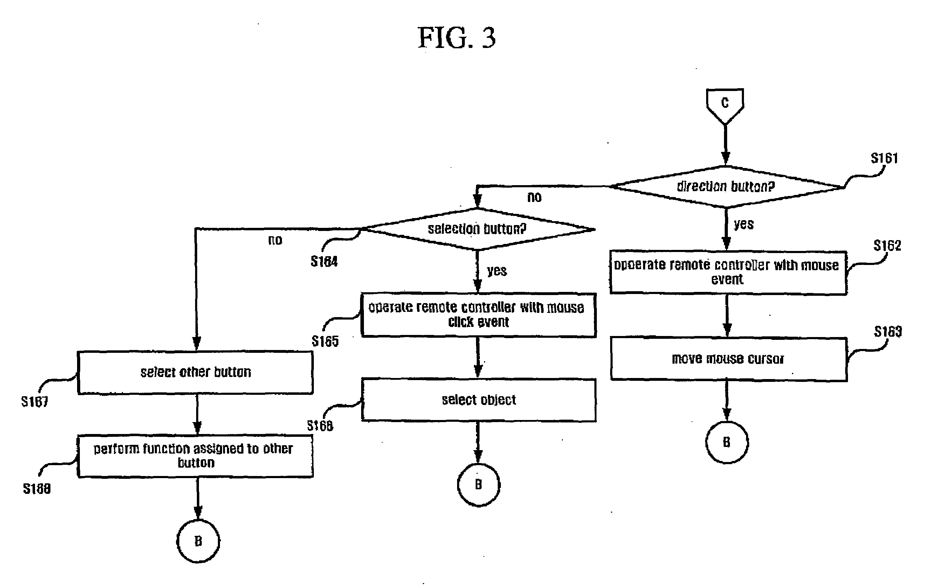

If the present remote controller mode is determined as a mouse mode, the remote controller is operated with the mouse event (S160). Herein, the mouse event may be performed using a direction button, a selection button, and the like. Hereinafter, an operation of the remote controller with the mouse event will be explained with reference to FIG. 3.

First, if the user selects the direction button (S161), the event processing module 310 allows the remote controller to be operated with a mouse movement event (S162) so that a mouse cursor moves in a direction indicated by the direction button, which has been selected by the user (S163).

For example, if the user selects a left direction button, the mouse cursor may move in a left direction on a flash screen. In addition, if the user continuously presses the left direction button, the mouse cursor may further move in the left direction.

Meanwhile, if the user selects a selection button (S164), the event processing module 310 allows the remote controller to be operated with a mouse click event (S165) so that the user can easily select a desired object from the flash screen by clicking the remote controller (S166). That is, after moving the mouse cursor to the desired object on the flash screen, the user clicks the desired object by using the selection button. Thus, the user can easily select the object.

In the meantime, if the key button selected by the user is a predetermined key button having a predetermined function, the predetermined function assigned to the predetermined key button will be carried out (S167 and S168).

Then, if the key code value of the remote control signal inputted from the user belongs to the key code value of the second key group (S170) in FIG. 2, the event processing module 310 judges the function assigned to the special key selected by the user. Herein the special key may include an end key, a cancellation key and the like. Hereinafter, the operation of the remote controller when the second key group is selected will be described in detail with reference to FIG. 4.

If the special key selected by the user is the end key, the event processing module 310 closes the web page displayed on the screen (S171).

If the special key selected by the user is the cancellation key, the event processing module 310 converts the mouse mode into the keyboard mode (S173).

That is, if the user selects the cancellation key when the present remote controller mode is the mouse mode, the flash image displayed on the screen disappears. At this time, the event processing module 310 sends a signal to the remote controller mode convert module 220 in order to convert the mouse mode into the keyboard mode. Thus, the remote controller mode convert module 220 converts the remote controller mode into the keyboard mode.

In the meantime, if the key selected by the user is a specific key having a predetermined function, the predetermined function assigned to the specific key is carried out (S174 and S175).

According to an exemplary embodiment of the present invention, the web page requested by the user is displayed on a TV screen. In this state, it is checked whether or not the remote control signal is inputted from the user. Herein, the remote controller mode is set in the keyboard mode.

If the remote control signal from the user is detected, the key code value of the remote control signal is checked and determines whether the key code value of the remote control signal belongs to the first key group or the second key group.

For instance, if the key code value of the remote control signal belongs to the first key group, the present remote controller mode is checked. At this time, it is assumed that the present remote controller mode is set as the keyboard mode. Since the remote controller mode is set as the keyboard mode, the remote controller is operated with the key event.

Then, if the key code value of the remote control signal inputted from the user matches with the direction key, the selection focus is moved into an object aligned in the vicinity of an object in which the selection focus is positioned. In this state, a predetermined time lapses while waiting for a signal input of the user.

If the signal input from the user is detected, the key code value of the remote control signal inputted by the user is determined. In addition, the sort of objects selected by the user is determined if the key code value of the remote control signal matches with the selection key.

If the object selected by the user is a flash object, the remote controller mode is converted into the mouse mode. Thus, the remote controller is operated with the mouse event.

Thereafter, a predetermined time lapses while waiting for the signal input of the user. If the signal input from the user is detected, the key code value of the remote control signal inputted by the user is determined. In addition, if the key code value of the remote control signal matches the key code value of the direction button, the mouse cursor displayed on the flash screen is moved in a direction selected by the user.

After that, if the user selects the cancellation key, which means that the key code value of the remote control signal selected by the user belongs to the second key group, a cancellation operation is carried out regardless of the remote controller mode so that the flash screen is closed. In addition, the mouse mode is again converted into the keyboard mode.

As described above, the remote controller is capable of selecting an object and the method for operating the same according to preferred embodiments of the present invention have advantages as follows:

First, the user can easily control the object of the web page displayed on the TV screen.

Second, the remote controller mode is automatically converted according to the sort of objects of the web page so that it is not necessary for the user to frequently manipulate the remote controller for converting the remote controller mode.

Third, the user can easily access the Internet by simply changing software without changing hardware.

Fourth, the user can easily access the Internet without re-establishing portal sites and can use a variety of functions of the Internet without restriction.

Although a preferred embodiment of the present invention has been described for illustrative purposes, those skilled in the art will appreciate that various modifications, additions and substitutions are possible, without departing from the scope and spirit of the invention as disclosed in the accompanying claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A display device capable of selecting a displayed object by using a remote controller, the display device comprising:
an input unit (100) for receiving a remote control signal generated when a user uses the remote controller;
a remote controller mode management unit (200) receiving the remote control signal from the input unit (100) in order to check a key code value of the remote control signal, and in order to judge and convert a present remote controller mode; and
a control unit (300) for controlling an operation of the remote controller based on the remote control signal inputted from the user and controlling a remote controller mode according to a type of displayed object selected by the user.

2. The display device as claimed in claim 1, wherein the key code value of the remote control signal includes one of key code values of a first key group and key code values of a second key group, the key code values of the first key group performing a predetermined function by taking the remote controller mode into consideration, the key code values of the second key group performing predetermined functions assigned to predetermined keys.

3. The display device as claimed in claim 2, wherein the first key group is operated with one of a. keyboard mode and a mouse mode, the keyboard mode controlling the object through a key event, the mouse mode controlling the object through a mouse event using a mouse cursor.

4. The display device as claimed in any preceding claim, wherein the remote controller mode management unit (200) includes a remote controller mode check module (210), which receives the remote control signal from the input unit (100) in order to check the key code value of the remote control signal and the remote controller mode in the remote controller and to set the remote controller mode as a keyboard mode when loading a web page, and a remote controller mode convert module (220), which stores the remote controller mode transmitted thereto from the remote controller mode check module (210), converts the remote controller mode according to a request of the control unit (300), and stores the converted remote controller mode therein.

5. The display device as claimed in any preceding claim, wherein the control unit (300) includes an event processing module (310) for controlling an operation of the remote controller according to the remote control signal and an object judgment module for judging a type of object selected by the user and converting the remote controller mode based on a result of the judgment.

6. The display device as claimed in claim 5, wherein if the object selected by the user requires plug-in applications, the remote controller mode is set as a mouse mode.

7. The display device as claimed in any preceding claim, further comprising a display unit (400) for displaying a web page and the object selected by the user according to a request of the user.

8. A displaying method capable of selecting an object by using a remote controller, the displaying method comprising:
i) displaying a web page requested by a user and determining a key code value of a control signal selected by the user;
ii) judging a remote controller mode in the remote controller and controlling the object according to the remote controller mode if the key code value of the remote control signal belongs to a first group; and
iii) performing functions assigned to predetermined keys selected by the user if the key code value of the remote control signal belongs to a second group.

9. The method as claimed in claim 8, wherein the remote controller mode includes a keyboard mode for controlling the object through a key event, and a mouse mode for controlling the object through a mouse event using a mouse cursor.

10. The method as claimed in claim 8 or claim 9, wherein judging the remote controller mode includes:
a) moving a selection focus to a second object aligned next to a first object in which the selection focus is located when the remote controller mode in the remote controller is a keyboard mode and the key code value of the remote control signal matches a direction key; and
b) judging a type of object selected by the user when the remote controller mode in the remote controller is the keyboard mode and the key code value of the remote control signal matches a selection key.

11. The method as claimed in claim 10, wherein judging the type of object selected by the user includes:
A) converting the remote controller mode into a mouse mode if the type of object selected by the user requires plug-in applications; and
B) moving the selection focus to a ULR connected to the object if the type of object selected by the user does not require plug-in applications.

12. The method as claimed in any one of claims 8-11, wherein judging the remote controller mode includes:
a) operating the remote controller with a mouse event and determining a button value inputted by the user if the remote controller mode is a mouse mode;
b) operating the remote controller with a mouse movement event and moving a mouse cursor in a predetermined direction if the user selects a direction button; and
c) operating the remote controller with a mouse click event and selecting a predetermined object if the user selects a selection button.

13. The method as claimed in any one of claims 8-12, wherein the functions assigned to predetermined keys selected by the user includes:
a) closing a web page requested by the user if the user selects an end key; and
b) converting the remote controller mode into a keyboard mode if the user selects a cancellation key.
